# EUROPEAN PATENT APPLICATION

(11) **EP 3 854 771 A1**
(43) Date of publication of application: **28.07.2021**
(21) Application number: 20382035.2
(22) Date of filing: 22.01.2020
(51) Int. Cl.: C05F 11/02

(54) **PROCESS FOR ENRICHMENT OF COAL WITH HUMIC ACIDS**

(71) Applicant: Sociedad Anónima Minera Catalano-Aragonesa, 50001 Zaragoza (ES)
(72) Inventor: CABALLERO LÓPEZ, MIGUEL ÁNGEL, 50001 ZARAGOZA (ES); TOLOSA CORTÉS, JOSÉ IGNACIO, 50001 ZARAGOZA (ES)
(74) Representative: Schäfer, Matthias W.

(57) **Abstract**

Procedure for enrichment of humic acids in coal characterised in that it comprises a natural mix, performed mechanically, of coal in solid form and an alkaline hydroxide in the form of MOH.

The invention presented affords the main advantage of enabling coals with an average-low humic acid content to be converted into coals with average and average-high humic acid contents, by means of a simple process, easily scalable and replicable at industrial level, in an economic way that avoids having to manage aqueous suspensions.

## Description

The present description relates, as its title indicates, to a procedure for enrichment of humic acids in coal, characterised in that it comprises a natural mix, carried out mechanically, of coal in solid form and an alkaline hydroxide in the form of MOH, allowing coals with an average-low content of humic acids to be converted into coals with an average-high humic acid content.

### Field of the invention

The invention relates to the field of coal processing and, more specifically, to processes of enrichment of humic acids in coal.

### Current State of the Art

To facilitate the description of the current state of the art and to gain a better understanding of the invention, a series of related definitions are given in advance:

### Humic substances/humic acids

Humic acids are a primary component of humic substances, which are the main organic components of soil (humus). They are complex macromolecular groups in which the basic units are aromatic compounds of a phenolic nature that originate from decomposition of organic matter and nitrogen compounds, both cyclic and aliphatic, synthesized by certain microorganisms present in biomass.

Fulvic acids can also be included within humic substances and are characterised by being soluble in acid media, unlike humic acids. In general, fulvic acids are normally referred to within the group of humic acids, which are sometimes referred to as humic extract. For the sake of clarity, in this description we will refer to humic acids and include fulvic acids in that definition, that is, as a synonym of total humic extract.

They are useful in agriculture as organic amendments since they provide certain soil improvements (porosity, improved structure) and serve to retain and release nutrients in a controlled way which results in fewer nutrients having to be added to soil to obtain the same efficacy.

They are typically found in soil and in organic matter and in this context in particular in compost (plant or animal waste) and in urban organic waste.

It is a component that is found in some lignites. In sub-bituminous coal, bituminous coal and anthracite, generally in low levels.

### Leonardite

A mineral sometimes found in the top layers of lignite/sub-bituminous coal mines, characterised by its high humic acid content (at least 50% of the dry matter). Leonardite is formed from layers of lignite that have undergone weathering, that is, the influence of ambient conditions (humidity, pressure, oxygen, CO₂, NOx, etc...) over long periods of time in geological terms.

### Coal

Coal is typically divided into four main types (anthracite, bituminous/sub-bituminous coal, lignite and peat) according to its degree of mineralisation or heating power. Based on this general classification, more thorough, specific classifications have been attempted. Most of these establish a subdivision in the field of sub-bituminous coals, resulting in three different groups (A, B and C) depending on the closer (C) or further away (A) the sub-bituminous coal is to lignite.

In the scope of this description the term *coal* shall be understood to include peat, lignite, sub-bituminous coal, bituminous coal, anthracite and leonardite, and coal or coals shall be used interchangeably as the generic name.

### Fertilizer

Product used in agriculture or gardening that, by delivering nutrients, aids plant growth, enhances yields and improves the quality of harvests or, which, due to its specific action, modifies, as appropriate, the fertility of the soils or its physical, chemical or biological characteristics. Principally, fertilizers can be inorganic or mineral, organic, organomineral, and amendments.

### Nutrient

Essential chemical element for plant life and growth. In addition to carbon (C), oxygen (O) and hydrogen (H), especially from the air and water, nutrient elements are classed as: primary nutrients, secondary nutrients and micronutrients.

### Primary nutrients

These are exclusively nitrogen, phosphorus and potassium

### Secondary nutrients

These are calcium, magnesium, sodium and sulfur.

### Micronutrients

These are boron, cobalt, copper, iron, manganese, molybdenum and zinc, which are essential elements for plant growth, although in small quantities, in comparison to primary and secondary nutrients.

### Organomineral fertilizer

Fertilizers that contain organic matter and a mineral part. The mineral part provides the nutrients that the plant requires. Generally these are minerals that provide the primary nutrients (N, P and K), and they may also provide secondary nutrients (Ca, Mg, S) and trace elements (Fe, Mn, Zn, etc...). The fertilizer industry supplies all of these elements in numerous chemical formulae and commercial presentations.

At legislative level there are more specific categories of products based on their humic acid content. Thus, Spanish legislation (Royal Decree 506/20013, of 28th June, on fertilizer products) includes the categories:
- Humic acids. 4103
   Product obtained by treating or processing lignite, leonardite, peat or any of the organic amendments in group 6, which fundamentally contains humic acids.
   Minimum contents:
      - Humic acids: 7%
      - Total humic extract (humic acids + fulvic acids): 15%
- Fertilizer with humic acids. 4104
   EC fertilizer or group 1 fertilizer to which type 03 humic acids have been incorporated
   Minimum contents:
      - Humic acids: 3%
      - Total humic extract (humic acids + fulvic acids): 6%
      - All of the prescribed requirements for a fertilizer to which humic acids are added.

In relation to the current state of the art as it stands, the use of humic acids/leonardite is well known in agriculture. In scientific literature, the names of lignite/leonardite/bituminous coal/sub-bituminous coal are often either interchanged or used indistinctly giving rise to confusion since the same processes described in the scientific literature applied to different types of coal (and hence with different humic acid concentrations) necessarily afford different results to those originally envisaged and very frequently these are insufficient for the intended effects. This is even applicable to coals of the same type but from different geographical locations or from different mines, as they also have different humic acid concentrations. As a result, the processes known in scientific literature cannot usually be extrapolated and must be defined and developed for each specific type of lignite, leonardite or bituminous or sub-bituminous coal, specifying, as far as possible, the necessary characteristics of the mineral, especially in terms of concentrations of humic acids.

The patents that can be cited as the most recent state of the art with regard to the enrichment of humic acids in coal, usually to obtain fertilizers, are: ES2678421 *"Procedure to obtain fertilizer from sub-bituminous coal* ", CN109553501 *"Method for preparing active silicon active humic acid composite fertilizer from inferior coal, and composite fertilizer obtained by using same"* and US5688999 *"Production of oxidized humic acids by an oxygen-alkali process".* All of them present the problem of requiring long, complex processes, with high energy consumption and the need for complex industrial facilities, as well as a high use of aqueous compounds that then have to be treated before disposal.

Furthermore, there are also well known precedents of treating coals with alkaline hydroxides, basically NaOH and KOH. This has been carried out for diverse purposes other than for enrichment in humic acids:
- To eliminate or minimise the percentage of S in coals, thus reducing polluting emissions when the coal is burnt in thermal power plants, as described for example in *"*Effect of leaching high sulphur subbituminous coal by potassium hydroxide and acid on removal of mineral matter and sulphur" (Samit Mukherjee, Prakash Chandra Borthakur - Regional Research Laboratory - India - 2002), and in *"Desulfurization of Lignite and Coal Using Alkaline Solution from Biomass Ashes"* (Ayhan Demirba 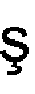 - Trabzon, Turkey - 2002).
- As a means of preventing spontaneous combustion in coal, in particular in lignite. The presence of alkaline metals causes the auto-ignition temperature to increase, which hinders the process of spontaneous combustion. Many scientific references to this can be found. The quantities of alkaline hydroxides (considered as pure solids) are generally 1-3% by weight.
- As a prior step to obtaining activated carbon. The mix of coals with alkaline hydroxides (considered as pure solids), with weight ratios of up to 1:2 and subsequent thermal treatment (300-600ºC, in various types of atmospheres) allows activated carbons to be obtained, as described in "Preparation of Activated Carbons from Chinese Coal and Hydrolysis Lignin" (Yong Zou and Bu-Xing Han - The Chinese Academy of Sciences, China - 2000) y en *"*Types of carbon adsorbents and their production" (J. A. Menéndez-Díaz and I. Martin-Gullon - Instituto Nacional de Carbon, CSIC - España - 2006).

To the best of our knowledge, the enrichment of humic acids in coals or leonardite by simply adding an alkaline hydroxide MOH (M=Li, Na, K) and subsequently mixing and/or grinding it, has not been previously described.

### Description of the invention

To resolve the problems that currently exist with the enrichment of humic acids in coal, in a simple way, and improving the state of the art, a procedure for the enrichment of humic acids in coal has been envisaged, consisting of simply adding an alkaline hydroxide MOH (M=Li, Na, K) and subsequently proceeding to its mixing and/or grinding.

The procedure can be carried out in two stages:
- Addition of alkaline hydroxide MOH (M=Li, Na, K), preferably in liquid form, onto coal in solid form.
- Mixing and/or grinding of the mixture obtained.

The particle size of the coal used must be less than 2 mm. With finer particle sizes the process is more effective. The preferred particle size is around 250 microns. With smaller particle sizes problems arise when handling the coal.

The coal does not have to be dry, although it must have a moisture content that enables it to be handled as a solid (typically 35-40% moisture content).

The alkaline hydroxide MOH (M=Li, Na, K) can be added in solid form or in liquid form, in concentrations by weight that are well known in the industrial sector. The quantity of alkaline hydroxide MOH (M=Li, Na, K), as a pure solid, is between 2 and 20% by weight in relation to the dry coal quantity. Obviously the preferred alkaline hydroxide is KOH, given that K is a primary nutrient in agriculture.

Mixing and/or grinding of the obtained mixture can be carried out using any kind of industrial-type mixer. Use of intensive mixers is not required to obtain humic enrichment, although, in general, this affords the process greater effectiveness. This particular case is preferable when using coal with a particle size of around 500 microns or less.
In particular, the use of a mixing and grinding system is preferred. This speeds up the process and better interaction is achieved between the coal and the alkaline hydroxide MOH (M= Li, Na, K), permitting greater humic acid enrichment. This process is preferred when the coal used has a particle size greater than 500 microns.

Even more particularly, the use of a grinding system of the pendulum mill type is preferred. This type of mill has the advantage that it dries the product at the same time as it undergoes the grinding process. This way a product that is already dry is obtained. In addition, the drying process involves the use of a hot air flow that encourages the formation of humic acids and the enrichment of coal humic acids.

The process has been described for the enrichment of humic acids in coals (peat, lignite, sub-bituminous coal, bituminous coal, anthracite) by simply adding an alkaline hydroxide MOH (M=Li, Na, K). Given that in general these coals have an average-low humic acid content, with this system we obtain products with an average and average-high humic acid content. However, this procedure is perfectly applicable, with the same parameters, to coals with average and high humic acid content. In particular, it also enables the enrichment of leonardites with a high humic acid content (around 60% w/w of dry matter) up to values of 70-75% w/w of dry matter. The obvious requirement is that non-humic coal must be present in these leonardites.

The preferred use of the coal enriched with humic acids thus obtained, in the form of a powder, pellets or granules, is as a fertilizer. Clearly, the preferred alkaline hydroxide is KOH, given that K is a primary nutrient in agriculture. The preferred means of use of KOH is in its standard industrial liquid format (50% w/w).

One or several optional phases of the addition of supplementary components are envisaged, allowing a whole family of organomineral fertilizer products to be obtained. Both this new family of organomineral fertilizer products and the original coal enriched with humic acids can be formed by means of well-known techniques (grinding, extrusion, disc granulators, intensive granulators, etc.) followed by processes of sieving, drying, coating and/or colouring, packaging, etc.

### Advantages of the invention

The procedure for enrichment of humic acids in coal that is presented affords numerous advantages over currently know procedures, the most important being that it enables enrichment of humic acids in coals with average-low humic acid contents, favouring their use as fertilizers with average and average-high humic acid contents.

Particularly noteworthy is the advantage that this is a simple process, easily and economically scalable and replicable at industrial level,

Another important advantage compared to the currently existing humic enrichment operations is that it is a quicker, more effective and more economic process.

Furthermore, it is to be noted that this is a quick process, normally carried out in a time of between 5 and 10 minutes, not requiring large-sized facilities.

Another advantage to be highlighted is that it is respectful of the environment, as it is a dry process that does not require any management of suspensions or adding or eliminating of water, which consequently provides economic savings and minimises the environmental impact.

It is important to point out that the surprising and unexpected effect of the increase in humic acid content by the simple mechanical mixing with an alkaline hydroxide occurs both in coals with an average-low content (less than 25-30%), and in other products with a high humic acid content, such as leonardite.

Last but not least, it is must be emphasised that it allows a whole series of fertilizer products with average contents of humic acids to be obtained at a cost that is perfectly affordable for the agricultural sector, using coals as the raw material, which guarantees a practically limitless supply.

### Preferred embodiment of the invention

The procedure for enrichment of humic acids in coals that is the subject matter of this invention comprises two sequential phases:
- a phase of adding an alkaline hydroxide in the form of MOH onto a coal, the coal being in the form of a solid product, and
- a phase of mechanically mixing of the components.

In the phase of adding an alkaline hydroxide in the form of MOH onto coal, the coal is chosen from the group comprised of peat, lignite, sub-bituminous coal, bituminous coal, anthracite, leonardite and a mix of all or any thereof. This coal has a particle size of less than 2 mm, preferably around 250 microns.

In this same phase, the alkaline hydroxide in the form of MOH is chosen from the group comprised of LiOH, NaOH and KOH, and has a proportion of between 2% and 20% by weight in relation to the quantity of coal. The alkaline hydroxide can be in solid or liquid form.

Alternatively, it can comprise an additional forming phase, after the phase of mechanical mixing of the components, using techniques chosen from the group comprised of grinding, extrusion, granulator discs and intensive granulators. It is envisaged that this forming phase can also comprise processes chosen from the group comprised of sieving, drying, hot air flow drying, coating, colouring and packaging. After the forming phase, the coal enriched with humic acids is obtained in a form chosen from the group comprised of powder, pellets and granules.

Alternatively, it is envisaged that after any of the phases of adding an alkaline hydroxide in the form of MOH onto coal, the coal being in the form of a solid product, of mechanically mixing the components, or of forming, an additional phase may be performed consisting of mixing the product obtained with one or various additional products chosen from the groups of
- organic matter: lignite, sub-bituminous coal, peat, leonardite or compost,
- primary mineral nutrients:
   - N ammonium sulfate, urea, anhydrous ammonia, calcium cyanamide, nitrate of lime, Chile nitrate, ammonium nitrate, calcium ammonium nitrate, ammonium sulfate nitrate, magnesium nitrate, nitrogenous solutions and complex products with N,
   - P: superphosphates (single, double or triple), dicalcium phosphate, Thomas slag, crushed rock phosphate and calcined rock phosphate,
   - K: potassium chloride and potassium sulfate,
- secondary mineral nutrients
   Ca: nitrate of lime, calcium cyanamide, superphosphates (single or triple), Thomas slag, natural phosphates, gypsum, calcite and dolomite.
   - Mg: magnesium limes, dolomite or sepiolite,
   - S: ammonium sulfate, ammonium sulphate nitrate, magnesium nitrate, single superphosphate of lime, triple superphosphate of lime and potassium sulfate,
- limestone amendments: lime and dolomite,
- trace elements: Fe, Mn, B, Zn, Cu, Mb, CI, Co, I, Se, F, Si, and Al,
- amino acids,
- biostimulants, and
any combination of the above.

The phase of mechanically mixing the components is performed in a device chosen from the group comprised of a mixer, a mixer combined with mill and a pendulum mill.

It is characteristic and noteworthy that the humic acid enriched coal obtained according to the previously described procedure for enrichment of humic acids in coal has a preferred use as a fertilizer in agricultural work.

### Examples

As an example of the experimental activity performed to obtain this product, the following examples are provided:

### Example 1

To 5,000 g (of dry matter) of a coal with a humic acid content of 15.9% (w/w of dry matter), 750 g of KOH in solution (50% w/w) were added. The mixture was mixed in a dough mixing machine for 5 minutes. The next day it was ground in a laboratory mill. A product with a humic acid content of 19.7% and 6.0% of K₂O was obtained (both w/w of dry matter)

### Example 2

To 200 g (of dry matter) of a coal with a humic acid content of 11.3% (w/w of dry matter), 23 g of KOH in flakes with a purity of 85% was added. The mixture was ground in a laboratory mill for 3 minutes. A product with a humic acid content of 14.2% and 5.6% of K₂O was obtained (both w/w of dry matter)

### Example 3

To 200 g (of dry matter) of a coal with a humic acid content of 6.6% (w/w of dry matter), 33 g of KOH in flakes with a purity of 85% was added. The mixture was ground in a laboratory mill for 3 minutes. A product with a humic acid content of 24.1% and 9.8% of K₂O was obtained (both w/w of dry matter)

A technical expert will easily understand that the characteristics of different embodiments can be combined with the characteristics of other possible embodiments provided that the combination is technically possible.

All of the information referring to examples or embodiments forms part of the description of the invention.

## Claims

1. Procedure for enrichment of humic acids in coal **characterised in that** it comprises two sequential phases:
- a phase of adding an alkaline hydroxide in the form of MOH onto a coal, the coal being in the form of a solid product, and
- a phase of mechanically mixing the components.

2. Procedure for enrichment of humic acids in coal, according to the preceding claim, **wherein,** in the phase of adding an alkaline hydroxide in the form of MOH onto the coal, the coal being in the form of a solid product, the coal is chosen from the group comprised of peat, lignite, sub-bituminous coal, bituminous coal, leonardite and a mixture or all or any thereof.

3. Procedure for enrichment of humic acids in coal, according to either of the preceding claims, **wherein**, in the phase of adding an alkaline hydroxide in the form of MOH onto coal, the coal being in the form of a solid product, the alkaline hydroxide in the form of MOH is chosen from the group comprised of LiOH, NaOH and KOH.

4. Procedure for enrichment of humic acids in coal, according to any of the preceding claims, **wherein,** in the phase of adding an alkaline hydroxide in the form of MOH onto the coal, the coal being in the form of a solid product, the coal has a particle size of less than 2mm and the alkaline hydroxide MOH has a proportion of between 2% and 20% by weight of the dry matter, in relation to the quantity of coal.

5. Procedure for enrichment of humic acids in coal, according to either of the preceding claims, **wherein**, in the phase of adding an alkaline hydroxide in the form of MOH onto the coal, the coal being in the form of a solid product, the coal has a particle size of around 250 microns.

6. Procedure for enrichment of humic acids in coal, according to any of the previous claims, **wherein** it comprises a phase of forming, after the phase of mechanically mixing the components, using techniques chosen from the group comprised of grinding, extrusion, granulator discs and intensive granulators.

7. Procedure for enrichment of humic acids in coal, according to the preceding claim, **wherein** after the forming phase, the coal enriched with humic acids is obtained in a form chosen from the group comprised of powder, pellets and granules.

8. Procedure for enrichment of humic acids in coal, according to any of the preceding claims, **wherein** the forming phase comprises processes chosen from the group comprised of sieving, drying, hot air flow drying, coating, colouring and packaging.

9. Procedure for enrichment of humic acids in coal, according to any of the preceding claims, **wherein,** in the phase of adding an alkaline hydroxide in the form of MOH onto the coal, the coal being in the form of a solid product, the alkaline hydroxide is in solid form.

10. Procedure for enrichment of humic acids in coal, according to any of the claims 1 to 8, **wherein**, in the phase of adding an alkaline hydroxide in the form of MOH onto the coal, the coal being in the form of a solid product, the alkaline hydroxide is in liquid form.

11. Procedure for enrichment of humic acids in coal, according to any of the preceding claims **wherein** after any of the phases of adding an alkaline hydroxide in the form of MOH onto coal, the coal being in the form of a solid product, of mechanically mixing the components, or of forming, an additional phase is performed of mixing the product obtained with one or several additional products chosen from the groups of
- organic matter: lignite, sub-bituminous coal, peat, leonardite or compost,
- primary mineral nutrients:
- N ammonium sulfate, urea, anhydrous ammonia, calcium cyanamide, nitrate of lime, Chile nitrate, ammonium nitrate, calcium ammonium nitrate, ammonium sulfate nitrate, magnesium nitrate, nitrogenous solutions and complex products with N,
- P: superphosphates (single, double or triple), dicalcium phosphate, Thomas slag, crushed rock phosphate and calcined rock phosphate,
- K: potassium chloride and potassium sulfate,
- secondary mineral nutrients
Ca: nitrate of lime, calcium cyanamide, superphosphates (single or triple), Thomas slag, natural phosphates, gypsum, calcite and dolomite.
- Mg: magnesium limes, dolomite or sepiolite,
- S: ammonium sulfate, ammonium sulfate nitrate, magnesium nitrates, single superphosphate of lime, triple superphosphate of lime and potassium sulfate,
- limestone amendments: lime and dolomite,
- trace elements: Fe, Mn, B, Zn, Cu, Mb, CI, Co, I, Se, F, Si, and Al,
- amino acids,
- biostimulants, and
any combination of the above.

12. Procedure for enrichment of humic acids in coal, according to any of the preceding claims **wherein** the phase of mechanically mixing the components is performed in a device chosen from the group formed by a mixer, a mixer combined with a mill and a pendulum mill.

13. Procedure for enrichment of humic acids in coal, according to any of the preceding claims, **wherein** the forming phase comprises processes chosen from the group comprised of sieving, drying, hot air flow drying, coating, colouring and packaging.

14. Use of coal enriched with humic acids, obtained according to the procedure for enrichment of humic acids in coal described in the preceding claims, as a fertilizer in agricultural work.
